# EUROPÄISCHE PATENTSCHRIFT

(11) **EP 0 436 578 B1**
(45) Veröffentlichungstag und Bekanntmachung des Hinweises auf die Patenterteilung: **01.12.1993**
(21) Anmeldenummer: 89910426.9
(22) Anmeldetag: 18.09.1989
(51) Int. Cl.: H02B 13/035

(54) **BEHÄLTER EINER GASISOLIERTEN MITTELSPANNUNGS-LASTSCHALTANLAGE**
CONTAINER FOR A GAS-INSULATED MEDIUM-TENSION SWITCH
BOITIER POUR UN COMMUTATEUR EN CHARGE MOYENNE TENSION A ISOLATION PAR GAZ

(30) Priorität: 29.09.1988 DE 8812411 U
(43) Veröffentlichungstag der Anmeldung: 17.07.1991
(73) Patentinhaber: SIEMENS AKTIENGESELLSCHAFT, 80333 München (DE)
(72) Erfinder: SPÄCK, Helmut, D-6050 Offenbach (DE)
(86) Internationale Anmeldenummer: DE8900598
(87) Internationale Veröffentlichungsnummer: WO9003678

(56) Entgegenhaltungen:
- EP-A- 0 059 255
- DE-U- 8 306 120

## Beschreibung

Die Erfindung betrifft einen Behälter aus Blechteilen zur Aufnahme von Komponenten einer gasisolierten Mittelspannungs-Lastschaltanlage mit einem mittleren, rechteckigen Rahmenteil und diesen beidseitig verschließenden Deckorganen.

Ein Behälter dieser Art ist beispielsweise durch die DE-A-31 07 911 bekannt geworden, wobei Einzelheiten des darin gezeigten Behälters näher in dem DE-U-83 06 120 dargestellt sind. Mit diesem Aufbau eines Behälters soll erreicht werden, daß bei verhältnismäßig geringem Materialaufwand und damit geringem Gewicht eine gute Beständigkeit gegen den von dem Isoliergas ausgeübten Druck und andererseits ein für den Einbau der Schaltgeräte und Sammelschienen gut zugänglicher Raum geschaffen wird.

Der Erfindung liegt hiervon ausgehend die Aufgabe zugrunde, die Herstellungsweise des Behälters ohne Verzicht auf seine sonstigen Vorzüge erheblich zu vereinfachen.

Gemäß der Erfindung wird diese Aufgabe dadurch gelöst, daß wenigstens drei der den Rahmenteil bildenden Wandteile wenigstens auf einer Seite einen angeformten trapezförmigen Ansatz aufweisen und daß die einander zugewandten Kanten benachbarter Ansätze unter Bildung eines teilweisen bzw. vollständigen pyramidenstumpfförmigen Körpers verschweißt sind, wobei die jeweils verbleibende Öffnung durch das als im wesentlichen ebene Platte ausgebildete Deckorgan verschlossen ist. Obwohl im Unterschied zu den bekannten Behältern keine gewölbten Abdeckorgane mehr verwendet werden, erweist es sich, daß die neue Gestaltung wesentlich einfacher herstellbar ist, dabei aber der bisherigen Bauweise an Festigkeit nicht nachsteht, sondern sie noch zu übertreffen vermag. Hinsichtlich der einfacheren Herstellbarkeit beruht der Vorteil darauf, daß gewölbte Wandteile nur mit Hilfe besonderer Vorrichtungen herstellbar sind, die im allgemeinen nur in Werkstätten zur Herstellung von Druckbehältern zur Verfügung stehen, während sich Abkantungen und gerade Schweißnähte auch in weniger spezialisierten blechverarbeitenden Betrieben herstellen lassen. Die günstigen Fertigungseigenschaften werden trotz des Wegfalles der gewölbten Abdeckorgane dadurch erzielt, daß die Pyramidenstumpfform eine bessere Annäherung an die optimale Kugelgestalt ermöglicht, als es durch die Kombination eines rechteckigen Rahmenteiles mit einem aufgelegten gewölbten Deckorgan geschieht. Die verbesserte Steifigkeit hat daher zur Folge, daß geringere Verformungen als bisher auftreten.

Um einen Behälter herzustellen, dessen räumliche Gestalt am ehesten den bisherigen Behältern mit gewölbten Deckorganen entspricht, wird man beidseitig des Rahmenteiles einen vollständigen Pyramidenstumpf vorsehen. Diese Form wird dadurch gewonnen, daß alle vier Wandteile des rechteckigen Rahmenteiles mit trapezförmigen Ansätzen ausgestattet werden. Dabei besteht zwanglos die Möglichkeit, durch eine gleiche oder abweichende Gestalt der Trapezform zu beiden Seiten des Rahmenteiles Pyramidenstümpfe mit gleicher Gestalt oder mit unterschiedlichem Winkel und unterschiedlicher Tiefe zu gewinnen. Wird im Rahmen der Erfindung von der Möglichkeit Gebrauch gemacht, nur drei der Wandteile des Rahmenteiles mit trapezförmigen Ansätzen zu versehen, so kann zusätzlich die Trapezform von zwei gegenüberliegenden Ansätzen unsymmetrisch ausgebildet sein, wobei deren nicht mit benachbarten Ansätzen zu verschweißende Schmalseiten etwa rechtwinklig zur Grundlinie der Trapezform verlaufen. Auf diese Weise entstehen Kanten, die bei beliebiger Winkelstellung der Ansätze relativ zu den Wandteilen, von denen sie ausgehen, eine Verbindung mit einer Platte oder einem Körper herzustellen gestatten, die bzw. der in der Ebene des nicht mit Ansätzen versehenen Wandteiles des Rahmenteiles verläuft.

Bei der vorstehend erläuterten unsymmetrischen Ausführungsform erweist es sich insbesondere als vorteilhaft, einen den bzw. die teilweisen pyramidenstumpfförmigen Körper überdeckenden Erweiterungskörper vorzusehen. Dieser kann insbesondere zur Aufnahme von Schmelzsicherungen dienen, wodurch die Möglichkeit geschaffen ist, eine kompakte Schalteinheit herzustellen, welche die Funktionen des Schaltens unter Last, Erdung sowie den Kurzschlußschutz umfaßt.

Wie bereits erwähnt, können die pyramidenstumpfförmigen Körper eine unterschiedliche Ausladung und einen unterschiedlichen Winkel aufweisen, wodurch die am freien Ende der Pyramidenstumpfform verbleibende Fläche unterschiedlich groß sein kann. In Abhängigkeit von dieser Größe kann es zweckmäßig sein, daß das hierfür vorgesehene Deckorgan an seiner Innenseite Versteifungsorgane besitzt, die nahe Vorprägungen für Durchführungen verlaufend angeordnet sein können. Solche Versteifungsorgane sind auch dann nützlich, wenn nur an einer Seite des rechteckigen Rahmenteiles trapezförmige Ansätze zur Bildung eines pyramidenstumpfförmigen Körpers vorgesehen sind und an der gegenüberliegenden Seite des Rahmenteiles die gesamte Fläche des Rahmenteiles durch ein ebenes Deckorgan verschlossen werden soll. Ebenso können die Wandteile des Rahmenteiles mit Versteifungsorganen versehen sein.

Wie dies an sich bekannt ist, können die Versteifungsorgane als aufgeschweißte U- oder Hutprofilschienen oder als eingedrückte Sicken ausgebildet sein.

Die Erfindung wird im folgenden anhand der in den Figuren dargestellten Ausführungsbeispiele näher erläutert.

Die Figur 1 zeigt in einer perspektivisch auseinander gezogenen Darstellung einen Behälter für eine gasisolierte Mittelspannungs-Lastschaltanlage, wobei einen rechteckigen Rahmenteil beidseitig abschließende Deckorgane als Einzelteile gezeigt sind.

Die Figuren 2 und 3 zeigen in einem gegenüber der Figur 1 kleineren Maßstab einen Behälter mit zwei pyramidenstumpfförmigen Fortsätzen mit unterschiedlicher Ausladung in einer Front- und einer Seitenansicht.

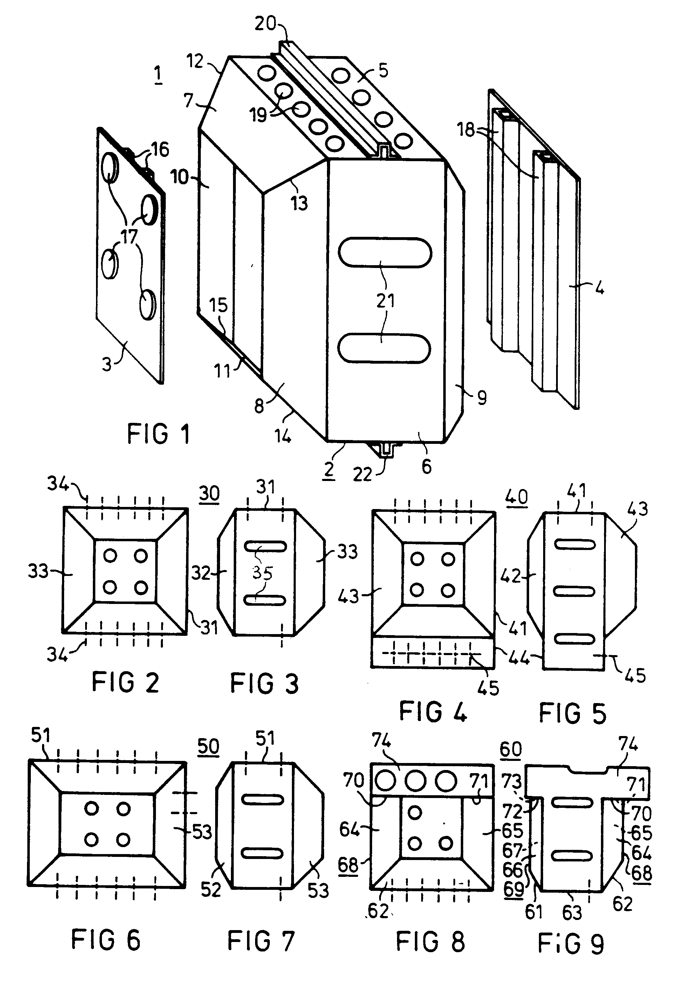

In einer den Figuren 2 und 3 entsprechenden Darstellung zeigen die Figuren 4 und 5 einen gleichfalls beidseitig mit pyramidenstumpfförmigen Ansätzen versehenen Behälter, dessen Rahmenteil gegenüber der Grundfläche der Pyramidenstumpfform erweitert ist.

Gleichfalls in einer den Figuren 2 und 3 entsprechenden Darstellung zeigen die Figuren 6 und 7 einen Behälter mit rechteckigem Querschnitt des Rahmenteiles.

Die Figuren 8 und 9 zeigen, wiederum in einer den vorangehenden Figuren entsprechenden Darstellung, einen Behälter mit unvollständigen pyramidenstumpfförmigen Fortsätzen, wobei am Rahmenteil ein Erweiterungskörper zur Aufnahme von Schmelzsicherungen vorgesehen ist.

Ein in der Figur 1 gezeigter Behälter 1 umfaßt einen Rahmenteil 2 sowie zwei Deckorgane 3 und 4, die als im wesentlichen ebene Platten ausgebildet sind. Der Rahmenteil 2 ist als Sonderfall der Rechteckform quadratisch ausgebildet und besteht aus vier einzelnen Wandteilen mit gleicher Kantenlänge, von denen die Wandteile 5 und 6 in der Figur 1 vollständig sichtbar sind. Ferner sind ein trapezförmiger Ansatz 7 des Wandteiles 5 und zwei trapezförmige Ansätze 8 und 9 beidseitig des Wandteiles 6 sichtbar. Zwei weitere trapezförmige Ansätze 10 und 11 sind der linken Seite der verbleibenden Wandteile des Rahmenteiles 2 zugeordnet. Wie die Figur 1 zeigt, sind die Ansätze 7, 8, 10 und 11 derart gegenüber dem Rahmenteil 2 abgewinkelt, daß ihre Schmalseiten miteinander in Berührung stehen und entlang der durch gebildeten Kanten 12, 13, 14 und 15 verschweißt werden können. Hierdurch ist ein pyramidenstumpfförmiger Körper gebildet.

Sinngemäß die gleiche Anordnung von trapezförmig abgewinkelten Ansätzen ist auf der gegenüberliegenden Seite des Rahmenteiles 2 vorgesehen, wobei aus Gründen der perspektivischen Darstellung aber nur der Ansatz 9 zu erkennen ist. Dieser ist somit gleichfalls Bestandteil eines pyramidenstumpfförmigen Körpers, der nach Ausladung und Winkel jedoch abweichend vor den links in der Figur 1 sichtbaren Pyramidenstumpf ausgebildet sein kann.

Im Bereich beider Pyramidenstümpfe ist das Gehäuse 1 durch die schon erwähnten Deckorgane 3 bzw. 4 verschlossen, die an ihrem Umfang mit den Rändern der trapezförmigen Ansätze verschweißt sind. An seiner Innenseite ist das Deckorgan 3 mit zwei parallel angeordneten, aufgeschweißten Hutprofilschienen 16 versehen, um bei einer verhältnismäßig geringen Wandstärke eine gute Verformungsfestigkeit zu erzielen. Nahe den Hutprofilschienen 16 sind Vorprägungen 17 für den bedarfsweisen Einbau von mechanischen Durchführungen angeordnet, die in bekannter Weise zur gasdichten Durchführung von Antriebsteilen für Schaltgeräte dienen. Ähnlich ist das auf der gegenüberliegenden Seite vorgesehene Deckorgan 4 beschaffen, das gleichfalls aufgeschweißte Hutprofilschienen 18 besitzt.

Aus der Figur 1 ist ferner zu entnehmen, daß der obere Wandteil 5 des rahmenartigen Gehäuseteiles 2 gleichfalls eine in der Umfangsrichtung des Gehäuses verlaufende Hutprofilschiene 20 aufweist, beidseitig von der Öffnungen 19 für Kabeldurchführungen angeordnet sind. Der anschließende Wandteil 6 ist mit eingedrückten Sicken 21 versehen. Der dem Wandteil 5 gegenüberliegende Wandteil ist gleichfalls mit einer Hutprofilschiene 22 zur Versteifung versehen. Der dem Wandteil 6 gegenüberliegende entsprechende Wandteil kann gleichfalls mit Sicken 21 oder anderen geeigneten Mitteln zur Versteifung ausgerüstet sein.

Bei einem Vergleich des beschriebenen Behälters mit einem Behälter der eingangs erwähnten bekannten Art ist zunächst festzustellen, daß der Kraftfluß ohne Sprung von den Wandteilen 5 und 6 zu dem Deckorganen 3 bzw. 4 verläuft. Die Blechabkantungen bewirken dabei eine hohe Steifigkeit und einen entsprechend hohen Verformungswiderstand. Ferner entsteht beim Zuschneiden der Wandteile des Rahmenteils 2 weniger Verschnitt als bisher, weil die zur Annäherung an die Kreisform gewölbter Deckorgane bisher benötigten Ausnehmungen der abgekanteten Schenkel der Wandteile entfallen.

Der in den Figuren 2 und 3 gezeigte weitere Behälter 30 weist zu beiden Seiten des quadratischen Rahmenteiles 31 pyramidenstumpfförmige Körper 32 bzw. 33 auf, deren Ende jeweils durch ein ebenes Deckorgan abgeschlossen ist. Wie die Figur 2 zeigt, ist der in der Figur 3 rechts gezeigte, pyramidenstumpfförmige Körper 33 weiter ausladend als der linke pyramidenstumpfförmige Körper 32 ausgebildet. Diese Form ist mit Rücksicht auf im Inneren des Behälters anzuordnende Einbauteile vorgesehen. Zur Anpassung hieran kann der Neigungswinkel und die Ausladung der pyramidenstumpfförmigen Körper 32 und 33 innerhalb beträchtlicher Grenzen variiert werden. Die Lage von Durchführungen von zu- und abführenden Leitungen ist in den Figuren 2 und 3 schematisch durch die zugehörigen Mittellinien 34 angedeutet. Wie anhand der Figur 1 erläutert, können Vorprägungen für den Einbau von mechanischen Durchführungen vorgesehen sein. Ferner sind Sicken 35 zur Versteifung des Rahmenteiles 31 gezeigt.

In den Figuren 4 und 5 ist ein weiterer Behälter 40 gezeigt, der eine mit dem Behälter 30 gemäß den Figuren 2 und 3 in wesentlichen Merkmalen übereinstimmende Gestalt aufweist. Unterschiedlich ist jedoch die Ausbildung des mittleren Rahmenteiles 41 derart, daß der Rahmenteil rechteckig ausgebildet ist und dadurch unten über die eine quadratische Grundfläche aufweisenden pyramidenstumpfförmigen Fortsätze 42 und 43 übersteht. Der überstehende Rahmenteil 44 ist zur Aufnahme von sechs Steckerdurchführungen vorgesehen, die gleichfalls durch ihre Mittellinien 45 angedeutet sind. Der Behälter 40 eignet sich daher insbesondere zum Anschluß der Ringkabel mit Steckern.

Während die vorstehend beschriebenen Behälterbauformen jeweils einen rechteckigen Rahmenteil mit gleicher Kantenlänge, d. h. mit quadratischer Grundform aufweisen, ist der Behälter 50 gemäß den Figuren 6 und 7 mit ungleicher Kantenlänge seines mittleren Rahmenteiles 51 ausgeführt. Dementsprechend weisen auch die pyramidenstumpfförmigen Fortsätze oder Körper 52 und 53 zu beiden Seiten des Rahmenteiles 51 eine ungleichseitige Grundfläche auf. Der Vorzug dieser Behälterform besteht darin, daß eine größere Anzahl von Geräten untergebracht werden kann, ohne eine vorgegebene Höhenabmessung überschreiten zu müssen. Von Bedeutung ist ferner, daß trotz der Rechteckform eine gute Festigkeit gegenüber dem inneren Gasdruck erzielt wird, ohne ungewöhnliche Wandstärken wählen zu müssen. Mit gewölbten Abschlußteilen wäre ein solches Gehäuse nur mit wesentlich größerem Aufwand zu realisieren.

Bei dem Behälter 60 gemäß den Figuren 8 und 9 wird von der nach der Erfindung gleichfalls vorgesehenen Möglichkeit Gebrauch gemacht, unvollständige pyramidenstumpfförmige Körper oder Fortsätze beidseitig eines Rahmenteiles vorzusehen. Wie insbesondere die Figur 8 zeigt, ist nur die Trapezform der unteren Ansätze 61 und 62 des Rahmenteiles 63 symmetrisch ausgeführt. Die benachbarten Ansätze 64 und 65 bzw. 66 und 67 sind in der Weise unsymmetrisch zugeschnitten, daß sie nach entsprechender Abkantung mit den unteren Fortsätzen 61 und 62 unter Bildung jeweils eines unvollständigen pyramidenstumpfförmigen Körpers 68 bzw. 69 verschweißt werden können. Die verbleibenden Schmalseiten 70 und 71 bzw. 72 und 73 der Ansätze 64 und 65 sowie 66 und 67 verlaufen dagegen rechtwinklig zu der Grundlinie der Trapezform und liegen damit in der Ebene eines Erweiterungskörpers 74 des Rahmenteiles 63. Der Erweiterungskörper 74 kann insbesondere dazu vorgesehen sein, Gehäuse für Schmelzsicherungen (HH-Sicherungen) aufzunehmen.

Bei allen vorstehend beschriebenen Bauformen von Behältern sind die bei den bisher bekannten Behältern vorgesehenen gewölbten Wandteile durch vollständige oder unvollständige pyramidenstumpfförmige Körper mit gleicher Kantenlänge, d. h. qudratischer Grundform oder mit ungleicher Kantenlänge, d. h. einer rechteckigen Grundform ersetzt. Bei gleicher oder geringerer Materialdicke als bei den bisherigen Behältern wird dadurch die gleiche oder eine bessere Festigkeit gegenüber einem inneren Gasdruck erzielt.

## Patentansprüche

1. Behälter (1) aus Blechteilen zur Aufnahme von Komponenten einer gasisolierten Mittelspannungs-Lastschaltanlage mit einem mittleren, rechteckigen Rahmenteil (2) und diesen beidseitig verschließenden Deckorganen (3, 4), **dadurch gekennzeichnet,** daß wenigstens drei der den Rahmenteil (2) bildenden Wandteile (5, 6) wenigstens auf einer Seite einen angeformten trapezförmigen Ansatz (7, 8) aufweisen, und daß die einander Zugewandten Kanten (12, 13) benachbarter Ansätze (7, 8) unter Bildung eines teilweisen bzw. vollständigen pyramidenstumpfförmigen Körpers verschweißt sind, wobei die jeweils verbleibende Öffnung durch das als im wesentlichen ebene Platte ausgebildete Deckorgan (3) verschlossen ist. (Figur 1)

2. Behälter nach Anspruch 1, **dadurch gekennzeichnet,** daß bei Ausführung mit drei trapezförmigen Ansätzen (62, 64, 65) die Trapezform von zwei gegenüberliegenden Ansätzen (64, 65) unsymmetrisch ausgebildet ist, wobei deren nicht mit benachbarten Ansätzen zu verschweißende Schmalseiten (70, 71) etwa rechtwinklig zur Grundlinie der Trapezform verlaufen. (Figur 8, 9)

3. Behälter nach Anspruch 2, **dadurch gekennzeichne,** daß der Rahmenteil (63) einen den bzw. die teilweisen pyramidenstumpfförmigen Körper überdeckenden Erweiterungskörper (74) aufweist. (Figur 8, 9)

4. Behälter nach Anspruch 1, **dadurch gekennzeichnet,** daß nur an einer Seite des rechteckigen Rahmenteiles (2) trapezförmige Ansätze (7, 8, 10, 11) vorgesehen sind und daß die gegenüberliegende Seite des Rahmenteiles (2) gleichfalls durch eine im wesentlichen ebene, mit Versteifungsorganen (18) versehene Platte (4) als Deckorgan verschlossen ist. (Figur 1)

5. Behälter nach Anspruch 1, **dadurch gekennzeichnet,** daß das Deckorgan (3) und/oder der Rahmenteil (2) mit Versteifungsorganen (16, 18, 20, 22) versehen ist. (Figur 1)

6. Behälter nach Anspruch 5, **dadurch gekennzeichnet,** daß die Versteifungsorgane als aufgeschweißte U- oder Hutprofilschienen (16, 18, 20, 22) oder als eingedrückte Sicken (21) ausgebildet sind. (Figur 1)

## Claims

1. Container (1) made of sheet-metal parts for receiving components of a gas-insulated medium-voltage switch-disconnector unit, having a middle, rectangular housing part (2) and cover elements (3, 4) closing the latter on both sides, characterised in that at least three of the wall parts (5, 6) forming the housing part (2) have on at least one side an integral trapezoid projection (7, 8), and in that the mutually facing edges (12, 13) of adjacent projections (7, 8) are welded together with the formation of a partial or complete truncated pyramidal body, the opening which remains in each case being closed by the cover element (3) constructed as a substantially flat plate (Figure 1).

2. Container according to claim 1, characterised in that, with an embodiment having three trapezoid projections (62, 64, 65), the trapezoid shape is formed non-symmetrically by two opposite projections (64, 65), with the narrow sides (70, 71) thereof, which are not for welding to adjacent projections, running approximately at right angles to the base line of the trapezoid shape (Figures 8, 9).

3. Container according to claim 2, characterised in that the housing part (63) has an extension body (74) covering the partial truncated pyramidal body or bodies (Figures 8, 9).

4. Container according to claim 1, characterised in that trapezoid projections (7, 8, 10, 11) are provided only on one side of the rectangular housing part (2), and in that the opposite side of the housing part (2) is also closed by a substantially flat plate (4) provided with stiffening elements (18) and serving as a cover element (Figure 1).

5. Container according to claim 1, characterised in that the cover element (3) and/or the housing part (2) is provided with stiffening elements (16, 18, 20, 22) (Figure 1).

6. Container according to claim 5, characterised in that the stiffening elements are constructed as welded-on, U-section or top-hat section rails (16, 18, 20, 22) or as indented beads (21) (Figure 1).

## Revendications

1. Cuve (1) formée de pièces en tôle et destinée à loger des composants d'une installation de coupure en charge à moyenne tension, et à isolation par un gaz, comportant un élément médian en forme de cadre rectangulaire (2) et des éléments de recouvrement (3,4) fermant ce cadre des deux côtés, caractérisée par le fait qu'au moins trois des éléments de paroi (5,6), qui constituent l'élément en forme de cadre (2), possèdent, au moins d'un côté, un appendice saillant conformé et de forme trapézoïdale (7,8), et que les arêtes (12,13), qui sont tournées l'une vers l'autre, d'appendices saillants voisins (7,8), sont soudées en formant un corps de tronc de pyramide partiel ou complet, chaque ouverture subsistante étant fermée par l'élément de fermeture (3) réalisé sous la forme d'une plaque sensiblement plane. (figure 1).

2. Cuve suivant la revendication 1, caractérisée par le fait que, dans le cas de la forme de réalisation comportant trois appendices saillants de forme trapézoïdale (62,64,65), la forme trapézoïdale de deux appendices saillants opposés (64,65) est agencée de manière à être dissymétrique, les petits côtés (70,71) des appendices saillants, qui ne doivent pas être soudés à des appendices saillants voisins, étant approximativement perpendiculaires à la ligne de base de la forme trapézoïdale. (figures 8, 9).

3. Cuve suivant la revendication 2, caractérisée par le fait que l'élément en forme de cadre (63) possède un corps d'élargissement (74), qui recouvre le ou les corps partiellement en forme de tronc de pyramide. (figures 8, 9).

4. Cuve suivant la revendication 1, caractérisée par le fait que des appendices saillants de forme trapézoïdale (7,8,10,11) sont prévus uniquement d'un côté de l'élément en forme de cadre rectangulaire (2), et que le côté opposé de l'élément en forme de cadre (2) est également fermé par une plaque sensiblement plane (4), qui comporte des éléments de renforcement (18) et sert d'élément de fermeture. (figure 1).

5. Cuve suivant la revendication 1, caractérisée par le fait que l'élément de recouvrement (3) et/ou l'élément en forme de cadre (2) comporte des éléments de renforcement (16,18,20,22). (figure 1).

6. Cuve suivant la revendication 5, caractérisée par le fait que les éléments de renforcement sont réalisés sous la forme de rails profilés soudés en forme de U ou de chapeau (16,18,20,22) ou sous la forme de moulures formées en creux.
